# FASCICULE DE BREVET EUROPEEN

(11) **EP 4 452 697 B1**
(45) Date de publication et mention de la délivrance du brevet: **10.12.2025**
(21) Numéro de dépôt: 22823132.0
(22) Date de dépôt: 20.12.2022
(51) Int. Cl.: B60R 21/207, B32B 5/00, B60N 2/58, B60R 21/2342, D04B 1/22

(54) **SIÈGE DE VÉHICULE AUTOMOBILE**
KRAFTFAHRZEUGSITZ
MOTOR VEHICLE SEAT

(30) Priorité: 20.12.2021 FR 2114021; 07.07.2022 FR 2206992
(43) Date de publication de la demande: 30.10.2024
(73) Titulaire: TESCA Pacific, 92977 Paris La Défense Cedex (FR)
(72) Inventeur: PERIANES, Sergio, 92977 Paris La Défense Cedex (FR)
(74) Mandataire: Sayettat, Julien Christian
(86) Numéro de dépôt international: PCT/EP2022/087128
(87) Numéro de publication internationale: WO 2023/118235

(56) Documents cités:
- EP-A1- 0 795 636
- EP-A1- 0 795 636
- FR-A1- 2 978 712
- FR-A1- 2 978 712

## Description

L'invention concerne un siège de véhicule automobile et une coiffe d'un tel siège. Il est connu de réaliser un siège de véhicule automobile comprenant :
- une armature revêtue d'un coussin de rembourrage, ledit coussin étant revêtu d'une coiffe en textile tricoté,
- un système de protection solidaire de ladite armature, ledit système comprenant un sac gonflable - usuellement dénommé airbag - et un dispositif de gonflement dudit sac en situation d'accident,
sachant que :
- ledit coussin est pourvu d'un passage permettant le déploiement dudit sac à l'extérieur de ladite coiffe,
- ladite coiffe est pourvue d'une zone affaiblie de moindre résistance à la déchirure que le reste de ladite coiffe, ladite zone s'étendant selon une direction de référence rectiligne entre deux parties opposées de ladite coiffe et en regard dudit passage,
- lesdites parties présentent un maillage constitué d'une pluralité de rangées de boucles structurelles disposées côte à côte selon ladite direction de référence, chacune desdites boucles étant liée aux boucles qui l'entourent par une pluralité d'entremêlements. Un tel siège est connu du document EP0795636 A1.

La présence d'une telle zone affaiblie permet au sac gonflable de se déployer sans entrave en dégradant la coiffe uniquement dans la zone affaiblie, le reste de ladite coiffe n'étant pas détérioré.

De façon connue, la zone affaiblie est réalisée par une couture reliant les parties opposées, ladite couture étant réalisée avec un fil présentant une résistance à la rupture agencée pour qu'il se rompe sans dégradation desdites parties.

Cependant, une telle façon de procéder oblige à réaliser une opération spécifique de couture lors de la fabrication de la coiffe, ce qui induit une complexification de la fabrication et un renchérissement de la coiffe.

En outre, une coiffe tricotée présente une grande élasticité pouvant conduire à un mauvais déploiement de l'airbag qui entre en interférence avec ladite coiffe en produisant son ballonnement avant la rupture de la zone affaiblie, un tel effet pouvant conduire à une efficacité moindre dudit airbag.

L'invention a pour but de pallier ces inconvénients.

A cet effet, et selon un premier aspect, l'invention propose un siège de véhicule automobile comprenant :
- une armature revêtue d'un coussin de rembourrage, ledit coussin étant revêtu d'une coiffe en textile tricoté,
- un système de protection solidaire de ladite armature, ledit système comprenant un sac gonflable et un dispositif de gonflement, non représenté, dudit sac en situation d'accident,
sachant que :
- ledit coussin est pourvu d'un passage permettant le déploiement dudit sac à l'extérieur de ladite coiffe,
- ladite coiffe est pourvue d'une zone affaiblie de moindre résistance à la déchirure que le reste de ladite coiffe, ladite zone s'étendant selon une direction de référence rectiligne entre deux parties opposées de ladite coiffe et en regard dudit passage,
- lesdites parties présentent un maillage constitué d'une pluralité de rangées de boucles structurelles disposées côte à côte selon ladite direction de référence, chacune desdites boucles étant liée aux boucles qui l'entourent par une pluralité d'entremêlements,
ladite zone étant issue du tricotage de ladite coiffe et chacune desdites parties étant pourvue d'un fil de blocage de son allongement selon une direction perpendiculaire à ladite direction de référence, ledit fil :
- ayant été tricoté avec lesdites boucles lors du tricotage de ladite coiffe,
- s'étendant en zigzags en définissant une pluralité de portions rectilignes s'étendant selon ladite direction perpendiculaire et une pluralité de portions de raccordement desdites portions rectilignes entre elles, lesdites portions de raccordement s'étendant généralement selon ladite direction de référence,
- s'entremêlant dans lesdites boucles structurelles de manière à être intégré à ladite coiffe.

Avec l'agencement proposé, on supprime l'opération de réalisation d'une couture reliant les parties opposées, la liaison entre lesdites parties étant issue du tricotage de la coiffe.

Il en résulte une simplification de fabrication et une économie.

En outre, la présence du fil de blocage permet d'éviter un effet de ballonnement de la coiffe lors du déploiement de l'airbag, ce dernier étant efficacement dirigé vers la zone affaiblie qui se rompt promptement, ledit airbag pouvant alors se déployer sans entrave.

Selon un deuxième aspect, l'invention propose une coiffe pour un tel siège.

D'autres particularités et avantages de l'invention apparaîtront dans la description qui suit, faite en référence aux figures jointes, dans lesquelles :

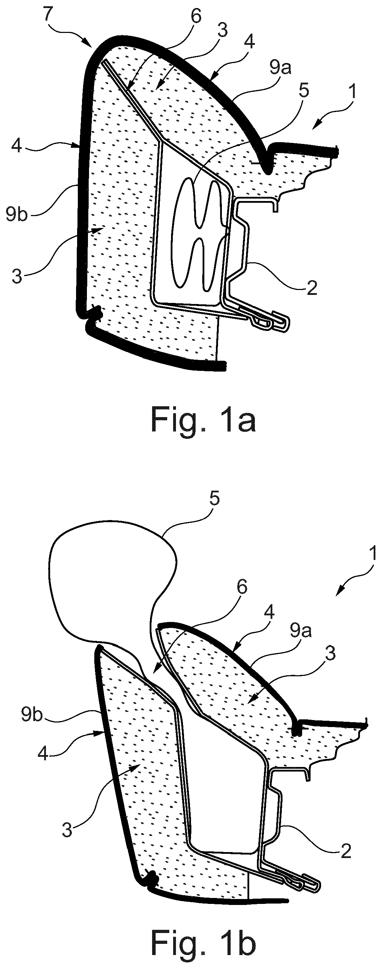

[Fig.1a] et
[Fig.1b] sont des vues schématiques en coupe partielle d'un siège selon une réalisation, le sac gonflable étant non déployé (figure 1a) et déployé (figure 1b),
[Fig.2] est une vue schématique partielle de face d'une coiffe selon une réalisation,
[Fig.3] est une vue schématique partielle de face d'une coiffe selon une autre réalisation.

En référence aux figures, on décrit un siège 1 de véhicule automobile comprenant :
- une armature 2 revêtue d'un coussin 3 de rembourrage, ledit coussin étant revêtu d'une coiffe 4 en textile tricoté,
- un système de protection solidaire de ladite armature, ledit système comprenant un sac gonflable 5 et un dispositif de gonflement, non représenté, dudit sac en situation d'accident,
sachant que :
- ledit coussin est pourvu d'un passage 6 permettant le déploiement dudit sac à l'extérieur de ladite coiffe,
- ladite coiffe est pourvue d'une zone affaiblie 7 de moindre résistance à la déchirure que le reste de ladite coiffe, ladite zone s'étendant selon une direction de référence 8 rectiligne entre deux parties opposées 9a,9b de ladite coiffe et en regard dudit passage,
- lesdites parties présentent un maillage constitué d'une pluralité de rangées 10 de boucles structurelles 11 disposées côte à côte selon ladite direction de référence, chacune desdites boucles étant liée aux boucles 11 qui l'entourent par une pluralité d'entremêlements 12,
ladite zone étant issue du tricotage de ladite coiffe et chacune desdites parties étant pourvue d'un fil 17 de blocage de son allongement selon une direction perpendiculaire 18 à ladite direction de référence, ledit fil :
- ayant été tricoté avec lesdites boucles lors du tricotage de ladite coiffe,
- s'étendant en zigzags en définissant une pluralité de portions rectilignes 19 s'étendant selon ladite direction perpendiculaire et une pluralité de portions de raccordement 20 desdites portions rectilignes entre elles, lesdites portions de raccordement s'étendant généralement selon ladite direction de référence,
- s'entremêlant dans lesdites boucles structurelles de manière à être intégré à ladite coiffe.

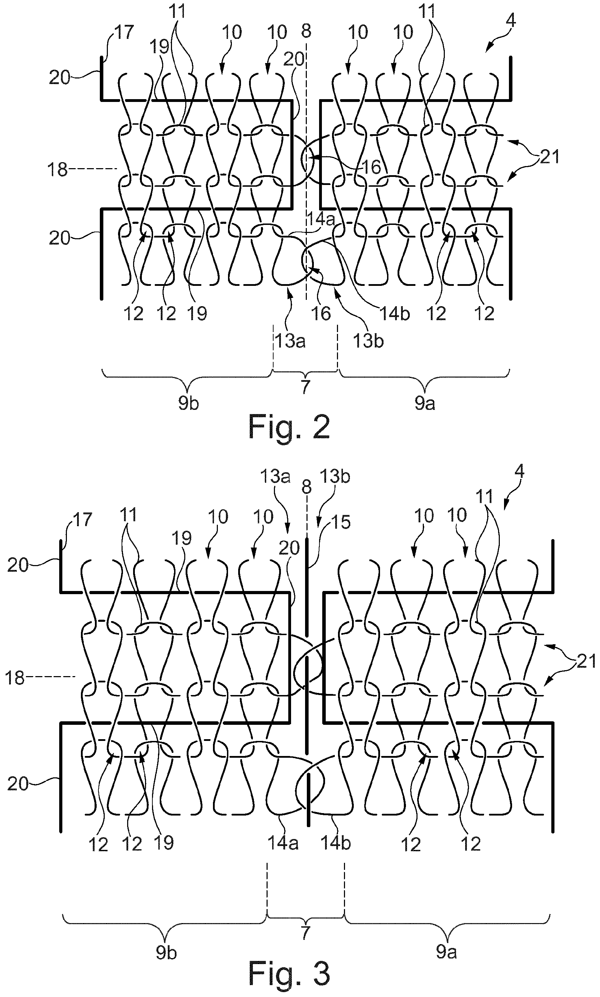

Selon la réalisation représentée en figure 2, le siège présente les caractéristiques suivantes :
- une rangée frontière 13a,13b de boucles de raccord 14a,14b est issue de tricotage de chacune des parties opposées 9a,9b, chacune des rangées frontière 13a,13b présentant, selon la direction de référence 8, une densité linéique de boucles de raccord 14a,14b moindre que celle des boucles structurelles 11 de l'une et l'autre desdites parties,
- la zone affaiblie 7 est formée par les deux rangées frontières 13a ,13b se reliant entre elles, par entremêlement de raccord 16, de chaque boucle de raccord 14a d'une desdites rangées 13a avec une boucle de raccord opposée 14b de l'autre desdites rangées 13b, de sorte que les boucles de raccord 14a,14b soient moins entremêlées que lesdites boucles structurelles.

Selon la réalisation représentée en figure 3, le siège 1 présente les caractéristiques suivantes :
- une rangée frontière 13a,13b de boucles de raccord 14a,14b est issue de tricotage de chacune des parties opposées 9a,9b,
- la zone affaiblie 7 est formée par les rangées frontières 13a, 13b où un fil 15, issu du tricotage de la coiffe 4, passe alternativement dans une boucle de raccord 14a d'une desdites rangées 13a et dans une boucle de raccord opposée 14b de l'autre desdites rangées 13b, ledit fil présentant une résistance à la rupture agencée pour que, sous l'effet du déploiement du sac gonflable 5, il se rompe sans entraîner une rupture desdites boucles de raccord.

Selon les réalisations représentées, les portions rectilignes 19 sont espacées l'une de l'autre selon un pas régulier, deux portions rectilignes 19 successives étant séparées par une ou plusieurs rangées perpendiculaires 21 de boucles structurelles 11 s'étendant selon la direction perpendiculaire 18.

Selon les réalisations représentées, deux portions rectilignes 19 successives sont séparées deux rangées perpendiculaires 21 de boucles structurelles 11.

On décrit enfin une coiffe 4 d'un tel siège 1, ladite coiffe étant pourvue d'une zone affaiblie 7 de moindre résistance à la déchirure que le reste de ladite coiffe, ladite zone étant issue du tricotage de ladite coiffe et chacune des parties 9a,9b de ladite coiffe étant pourvue d'un fil 17 de blocage de son allongement selon une direction perpendiculaire 18 à la direction de référence 8, ledit fil :
- ayant été tricoté avec lesdites boucles lors du tricotage de ladite coiffe.
- s'étendant en zigzags en définissant une pluralité de portions rectilignes 19 s'étendant selon ladite direction perpendiculaire et une pluralité de portions de raccordement 20 desdites portions rectilignes entre elles, lesdites portions de raccordement s'étendant généralement selon ladite direction de référence,
- s'entremêlant dans lesdites boucles structurelles de manière à être intégré à ladite coiffe.

## Revendications

1. Siège (1) de véhicule automobile comprenant :
• une armature (2) revêtue d'un coussin (3) de rembourrage, ledit coussin étant revêtu d'une coiffe (4) en textile tricoté,
• un système de protection solidaire de ladite armature, ledit système comprenant un sac gonflable (5) et un dispositif de gonflement dudit sac en situation d'accident,
sachant que :
• ledit coussin est pourvu d'un passage (6) permettant le déploiement dudit sac à l'extérieur de ladite coiffe,
• ladite coiffe est pourvue d'une zone affaiblie (7) de moindre résistance à la déchirure que le reste de ladite coiffe, ladite zone s'étendant selon une direction de référence (8) rectiligne entre deux parties opposées (9a,9b) de ladite coiffe et en regard dudit passage,
• lesdites parties présentent un maillage constitué d'une pluralité de rangées (10) de boucles structurelles (11) disposées côte à côte selon ladite direction de référence, chacune desdites boucles étant liée aux boucles (11) qui l'entourent par une pluralité d'entremêlements (12),
où ladite zone est issue du tricotage de ladite coiffe, ledit siège étant **caractérisé en ce que** chacune desdites parties est pourvue d'un fil (17) de blocage de son allongement selon une direction perpendiculaire (18) à ladite direction de référence, ledit fil :
• ayant été tricoté avec lesdites boucles lors du tricotage de ladite coiffe,
• s'étendant en zigzags en définissant une pluralité de portions rectilignes (19) s'étendant selon ladite direction perpendiculaire et une pluralité de portions de raccordement (20) desdites portions rectilignes entre elles, lesdites portions de raccordement s'étendant généralement selon ladite direction de référence,
• s'entremêlant dans lesdites boucles structurelles de manière à être intégré à ladite coiffe.

2. Siège selon la revendication 1, **caractérisé en ce que** :
• une rangée frontière (13a,13b) de boucles de raccord (14a,14b) est issue de tricotage de chacune des parties opposées (9a,9b), chacune des rangées frontière (13a,13b) présentant, selon la direction de référence (8), une densité linéique de boucles de raccord (14a,14b) moindre que celle des boucles structurelles (11) de l'une et l'autre desdites parties,
• la zone affaiblie (7) est formée par les deux rangées frontières (13a, 13b) se reliant entre elles, par entremêlement de raccord (16), de chaque boucle de raccord (14a) d'une desdites rangées (13a) avec une boucle de raccord opposée (14b) de l'autre desdites rangées (13b), de sorte que les boucles de raccord (14a,14b) soient moins entremêlées que lesdites boucles structurelles.

3. Siège selon la revendication 1, **caractérisé en ce que** :
• une rangée frontière (13a,13b) de boucles de raccord (14a,14b) est issue de tricotage de chacune des parties opposées (9a,9b),
• la zone affaiblie (7) est formée par les rangées frontières (13a,13b) où un fil (15), issu du tricotage de la coiffe (4), passe alternativement dans une boucle de raccord (14a) d'une desdites rangées (13a) et dans une boucle de raccord opposée (14b) de l'autre desdites rangées (13b), ledit fil présentant une résistance à la rupture agencée pour que, sous l'effet du déploiement du sac gonflable (5), il se rompe sans entraîner une rupture desdites boucles de raccord.

4. Siège selon l'une quelconque des revendications précédentes, **caractérisé en ce que** les portions rectilignes (19) sont espacées l'une de l'autre selon un pas régulier, deux portions rectilignes (19) successives étant séparées par une ou plusieurs rangées perpendiculaires (21) de boucles structurelles (11) s'étendant selon la direction perpendiculaire (18).

5. Coiffe (4) d'un siège (1) selon l'une quelconque des revendications précédentes, ladite coiffe étant pourvue d'une zone affaiblie (7) de moindre résistance à la déchirure que le reste de ladite coiffe, où ladite zone est issue du tricotage de ladite coiffe, ladite coiffe étant **caractérisé en ce que** chacune des parties (9a,9b) de ladite coiffe est pourvue d'un fil (17) de blocage de son allongement selon une direction perpendiculaire (18) à la direction de référence (8), ledit fil :
• ayant été tricoté avec lesdites boucles lors du tricotage de ladite coiffe.
• s'étendant en zigzags en définissant une pluralité de portions rectilignes (19) s'étendant selon ladite direction perpendiculaire et une pluralité de portions de raccordement (20) desdites portions rectilignes entre elles, lesdites portions de raccordement s'étendant généralement selon ladite direction de référence,
• s'entremêlant dans lesdites boucles structurelles de manière à être intégré à ladite coiffe.

## Patentansprüche

1. Sitz (1) eines Kraftfahrzeugs, umfassend:
• ein Gestell (2), das mit einem Polsterkissen (3) überzogen ist, wobei das Kissen mit einem Bezug (4) aus gestricktem Textil überzogen ist,
• ein Schutzsystem, das fest mit dem Gestell verbunden ist, das System umfassend einen aufblasbaren Sack (5) und eine Vorrichtung zum Aufblasen des Sacks in einer Unfallsituation, wobei:
• das Kissen mit einem Durchgang (6) versehen ist, der die Entfaltung des Sacks nach außerhalb des Bezugs ermöglicht,
• der Bezug mit einem geschwächten Bereich (7) versehen ist, der eine geringere Reißfestigkeit als der Rest des Bezugs aufweist, sich der Bereich entlang einer geradlinigen Bezugsrichtung (8) zwischen zwei gegenüberliegenden Teilen (9a, 9b) des Bezugs und gegenüber dem Durchgang erstreckt,
• die Teile ein Gitter aufweisen, das aus einer Vielzahl von Reihen (10) struktureller Schlaufen (11) besteht, die Seite an Seite in der Referenzrichtung angeordnet sind, wobei jede der Schlaufen durch eine Vielzahl von Verflechtungen (12) mit den Schlaufen (11) verbunden ist, die sie umgeben,
wobei der Bereich aus dem Stricken des Bezugs stammt, wobei der Sitz **dadurch gekennzeichnet ist, dass** jeder der Teile mit einem Faden (17) zum Blockieren seiner Streckung in einer Richtung senkrecht (18) zu der Bezugsrichtung versehen ist, wobei der Faden:
• beim Stricken des Bezugs mit den Schlaufen verstrickt wurde,
• sich zickzackförmig erstreckt, indem er eine Vielzahl von geraden Abschnitten (19), die sich in der senkrechten Richtung erstrecken, und eine Vielzahl von Anschlussabschnitten (20) der geraden Abschnitte untereinander definiert, wobei sich die Anschlussabschnitte allgemein entlang der Bezugsrichtung erstrecken,
• sich in die strukturellen Schlaufen verflechtet, um in den Bezug integriert zu sein.

2. Sitz nach Anspruch 1, **dadurch gekennzeichnet, dass**:
- eine Grenzreihe (13a, 13b) von Anschlussschlaufen (14a, 14b) aus Stricken von jedem der gegenüberliegenden Teile (9a, 9b) stammt, jede der Grenzreihen (13a, 13b) in der Bezugsrichtung (8) eine geringere lineare Dichte an Anschlussschlaufen (14a, 14b) aufweist als die strukturellen Schlaufen (11) des einen und des anderen der Teile,
• der geschwächte Bereich (7) durch die zwei Grenzreihen (13a, 13b) gebildet ist, die sich miteinander verbinden, indem jede Anschlussschlaufe (14a) einer der Reihen (13a) mit einer gegenüberliegenden Anschlussschlaufe (14b) der anderen der Reihen (13b) durch Anschlussverflechtung (16) verbunden wird, sodass die Anschlussschlaufen (14a, 14b) weniger verflochten sind als die strukturellen Schlaufen.

3. Sitz nach Anspruch 1, **dadurch gekennzeichnet, dass**:
• eine Grenzreihe (13a, 13b) von Anschlussschlaufen (14a, 14b) aus Stricken von jedem der gegenüberliegenden Teile (9a, 9b) stammt,
• der geschwächte Bereich (7) durch die Grenzreihen (13a, 13b) gebildet ist, wo ein Faden (15), der aus Stricken des Bezugs (4) stammt, abwechselnd in eine Anschlussschlaufe (14a) einer der Reihen (13a) und in eine gegenüberliegende Anschlussschlaufe (14b) der anderen der Reihen (13b) verläuft, wobei der Faden eine Reißfestigkeit aufweist, die ausgebildet ist, damit er unter der Wirkung der Entfaltung des aufblasbaren Sacks (5) reißt, ohne zu einem Bruch der Anschlussschlaufen zu führen.

4. Sitz nach einem der vorhergehenden Ansprüche, **dadurch gekennzeichnet, dass** die geraden Abschnitte (19) in einem regelmäßigen Abstand voneinander angeordnet sind, wobei zwei aufeinanderfolgende gerade Abschnitte (19) durch eine oder mehrere senkrechte Reihen (21) von strukturellen Schlaufen (11) getrennt sind, die sich in der senkrechten Richtung (18) erstrecken.

5. Bezug (4) eines Sitzes (1) nach einem der vorhergehenden Ansprüche, wobei der Bezug mit einem geschwächten Bereich (7) versehen ist, der eine geringere Reißfestigkeit als der Rest des Bezugs aufweist,
wobei der Bereich aus dem Stricken des Bezugs stammt, wobei der Bezug **dadurch gekennzeichnet ist, dass** jeder der Teile (9a, 9b) des Bezugs mit einem Faden (17) zum Blockieren seiner Streckung in einer Richtung senkrecht (18) zu der Bezugsrichtung (8) versehen ist, wobei der Faden:
• beim Stricken des Bezugs mit den Schlaufen verstrickt wurde,
• sich zickzackförmig erstreckt, indem er eine Vielzahl von geraden Abschnitten (19), die sich in der senkrechten Richtung erstrecken, und eine Vielzahl von Anschlussabschnitten (20) der geraden Abschnitte untereinander definiert, wobei sich die Anschlussabschnitte allgemein entlang der Bezugsrichtung erstrecken,
• sich in die strukturellen Schlaufen verflechtet, um in den Bezug integriert zu sein.

## Claims

1. Motor vehicle seat (1) comprising:
- a frame (2) covered by a padding cushion (3), said cushion being covered by a covering (4) made of knitted textile,
- a protection system secured to said frame, said system comprising an airbag (5) and a device for inflating said bag in an accident situation,
knowing that:
- said cushion is provided with a passage (6) allowing said bag to be deployed outside said covering,
- said covering is provided with a weakened zone (7) of lesser tear resistance than the rest of said covering, said zone extending in a rectilinear reference direction (8) between two opposite parts (9a, 9b) of said covering and facing said passage,
- said parts present a mesh consisting of a plurality of rows (10) of structural loops (11) arranged side by side in said reference direction, each of said loops being linked to the loops (11) surrounding it by a plurality of interweavings (12),
where said zone results from the knitting of said covering, said seat being **characterized in that** each of said parts is provided with a thread (17) for blocking its elongation in a direction (18) perpendicular to said reference direction, said thread:
- having been knitted with said loops during the knitting of said covering,
- extending in zigzags by defining a plurality of rectilinear portions (19) extending in said perpendicular direction and a plurality of portions (20) for connecting said rectilinear portions to each other, said connecting portions extending generally in said reference direction,
- interweaving with said structural loops so as to be integrated into said covering.

2. Seat according to claim 1, **characterized in that**:
- a boundary row (13a, 13b) of connecting loops (14a, 14b) results from the knitting of each of the opposite parts (9a, 9b), each of the boundary rows (13a, 13b) having, in the reference direction (8), a lower linear density of connecting loops (14a, 14b) than the structural loops (11) of either of said parts,
- the weakened zone (7) is formed by the two boundary rows (13a, 13b) that interconnect through a connecting interweaving (16) of each connecting loop (14a) of one of said rows (13a) with an opposite connecting loop (14b) of the other of said rows (13b), so that the connecting loops (14a, 14b) are less interweaved than said structural loops.

3. Seat according to claim 1, **characterized in that**:
- a boundary row (13a, 13b) of connecting loops (14a, 14b) results from the knitting of each of the opposite parts (9a, 9b),
- the weakened zone (7) is formed by the boundary rows (13a, 13b) where a thread (15), resulting from the knitting of the covering (4), passes alternately into a connecting loop (14a) of one of said rows (13a) and into an opposite connecting loop (14b) of the other of said rows (13b), said thread having a breaking strength arranged so that, under the effect of deployment of the airbag (5), it breaks without causing rupture of said connecting loops.

4. Seat according to any of the preceding claims, **characterized in that** the rectilinear portions (19) are spaced from one another at a regular pitch, two successive rectilinear portions (19) being separated by one or more perpendicular rows (21) of structural loops (11) extending in the perpendicular direction (18).

5. Covering (4) of a seat (1) according to any one of the preceding claims, said covering being provided with a weakened zone (7) of lesser resistance to tearing than the rest of said covering, where said zone results from the knitting of said covering, said covering being **characterised in that** each of the parts (9a, 9b) of said covering is provided with a thread (17) for blocking its elongation in a direction (18) perpendicular to the reference direction (8), said thread:
- having been knitted with said loops during the knitting of said covering,
- extending in zigzags by defining a plurality of rectilinear portions (19) extending in said perpendicular direction and a plurality of portions (20) for connecting said rectilinear portions to each other, said connecting portions extending generally in said reference direction,
- interweaving with said structural loops so as to be integrated into said covering.
